# EUROPEAN PATENT SPECIFICATION

(11) **EP 1 102 377 B1**
(45) Date of publication and mention of the grant of the patent: **15.04.2009**
(21) Application number: 00309741.7
(22) Date of filing: 03.11.2000
(51) Int. Cl.: H02G 3/06

(54) **Conduit junction piece cover**
Übergangsstückabdeckung für Kabelleitung
Couvercle pour pièce de jonction de conduit

(30) Priority: 19.11.1999 GB 9927255
(43) Date of publication of application: 23.05.2001
(73) Proprietor: Electrix International Limited, Bishop Auckland, County Durham DL14 6XP (GB)
(72) Inventor: Thomson, Malcolm, Weardale, Co Durham DL13 3HE (GB)
(74) Representative: Vinsome, Rex Martin

(56) References cited:
- EP-A- 0 859 441
- US-A- 4 349 220

## Description

The present invention relates to covers for conduits. Such conduit includes that used to carry electrical wiring, powdered or granular material, liquids or gases.

Trunking or conduit systems for electrical wiring are well known, and our earlier Patent Application Nos. GB9713860.6 and GB9702408.7 include improvements relating to such systems. These applications particularly describe covers for corner pieces which turn corners in a vertical and a horizontal plane respectively.

Conduit systems for electrical wiring are commonly used within the food, beverage and pharmaceutical industries, to protect the said wiring and to maintain surfaces which are easy to clean. In order to make such conduit systems as easy as possible to clean, it is important that the conduit systems are provided with smooth surfaces which are less inclined to trap dirt.

These types of conduit systems are_ primarily made from stainless steel. In order to minimise the cost of production of the parts of such conduit systems, it is of considerable advantage to produce parts which can be cut and bent from sheet material and with the minimum amount of welding or adhesion, or the addition of further parts which would require welding or adhesion.

For example Figure 1 shows a prior art conduit corner arrangement as described in our Patent Application No GB9702408.7. The corner arrangement comprises a corner piece 10, lid 12 and cover plate 14. Corner piece 10, because it has generally vertical sides, cannot be constructed by the simple cutting and bending of a blank cut from a single sheet of material. Similarly, when lid 12 is made from a single cut and bent sheet of material, edge portions 16 cannot be formed without producing notches 18 unless additional material is added. The acute angle of notches 18 makes them inclined to trap dirt and they therefore represent a hygiene risk to the pharmaceutical, food and beverage industries. The cost of cutting and welding into position pieces to fill in notches 18 significantly increases the cost of manufacture of the arrangement.

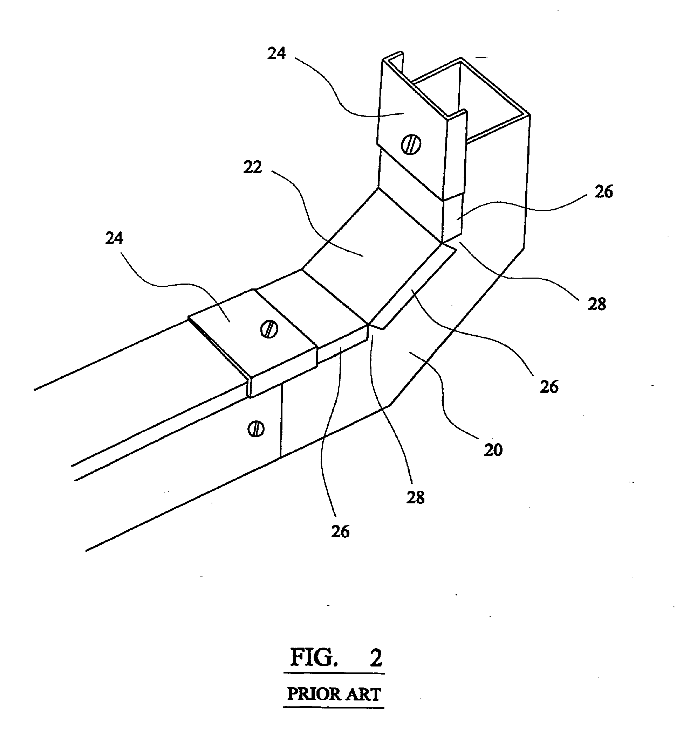

Figure 2 shows an example of a conduit corner arrangement similar to that described in our Patent Application No GB9713860.6. The corner arrangement comprises a corner piece 20, lid 22 and cover plates 24. Lid 22 is made from a single cut and bent sheet of material, from which edge portions 26 cannot be formed without producing notches 28 unless additional material is added. As described above, the acute angle of notches 28 makes them inclined to trap dirt and they therefore represent a hygiene risk to the pharmaceutical, food and beverage industries, and the cost of cutting and welding into position pieces to fill in notches 28 significantly increases the cost of manufacture of the arrangement.

Preferred embodiments of the present invention seek to overcome the above disadvantages of the prior art.

According to an aspect of the present invention, there is provided a cover for a junction piece for joining at least one first length of conduit to at least one second length of conduit extending at an angle thereto, the cover comprising:
a lid including:
a first surface having at least one first edge and at least one second edge extending at an angle to each other;
a respective first edge portion extending partially along the or each said first edge and substantially perpendicularly to said first surface; and
a respective second edge portion extending at least partially along the or each said second edge and substantially perpendicular to said first surface; wherein the or each first edge portion extends only partially along the corresponding first edge to create a gap adjacent the corresponding second edge portion, and said second edge portion extends beyond said second edge into said gap.

By providing at least one second edge portion which extends into a respective gap, this provides the advantage that the first edge portions and the part of the second edge portion extending into the or each gap can be covered by suitable means to provide a continuous surface, thus minimising the incidence of dirt traps.

Said first surface may be substantially planar.

Said first surface may comprise a plurality of substantially planar surfaces not extending in a single plane.

In a preferred embodiment, the cover further comprises at least one cover plate for partially covering said first surface, wherein the or each said cover plate extends in use from adjacent the junction between said first and second edges to beyond a third edge of said first surface which extends from said first edge and provides in use a junction with a lid of said first or second length of conduit.

By providing a cover plate extending from the extensions of the second edge portions to beyond the junction with adjoining conduit lids, this provides the advantage that as continuous a surface as possible of the junction piece and cover is provided, thus avoiding notches having an acute angle which would be inclined to collect dirt and thus provide a hygiene risk. Similarly, the cover plate for such a lid can be produced by simply cutting and bending a sheet of material.

Said cover plate may comprise a second substantially planar surface having at least one pair of fourth edges separated by at least one pair of fifth edges, said forth edges having third edge portions extending substantially perpendicular to said second surface.

In a further preferred embodiment said lid and or said cover plate are constructed from stainless steel sheet.

By constructing said lid and or said cover plate from stainless steel sheet provides the advantage that the conduit formed is easily cleaned.

In another preferred embodiment, the lid is provided with a gasket.

This provides the advantage of providing improved sealing, thereby further reducing the risk to hygiene.

The gasket is preferably of Neoprene.

As an aid to understanding the invention, preferred embodiments thereof will now be described, by way of example only and not in any limitative sense, with reference to the accompanying drawings in which:

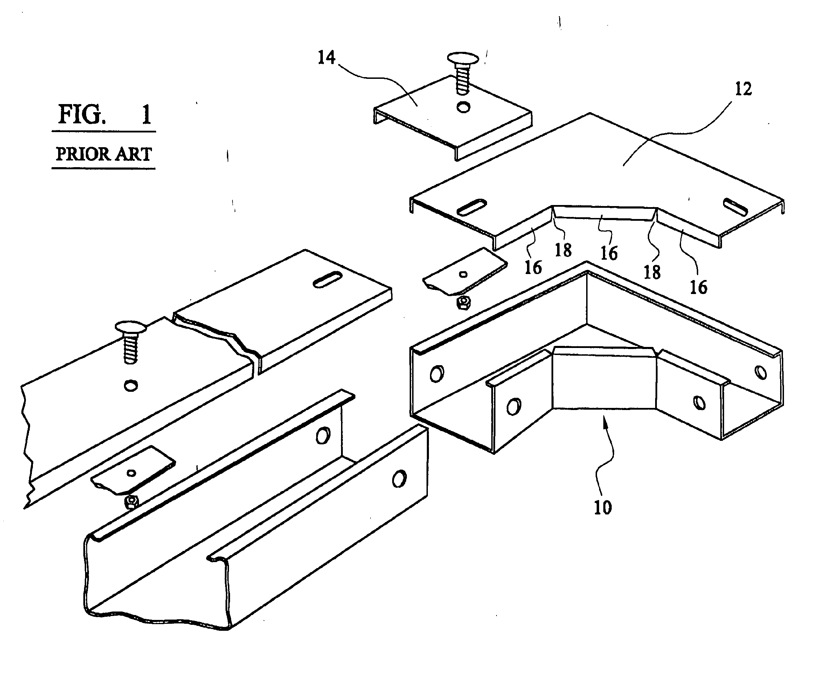

Figure 1 is a perspective view of a first type of prior art conduit corner arrangement;
Figure 2 is a perspective view of a second type of prior art conduit corner arrangement;
Figure 3 is a perspective view of a conduit corner arrangement of a first embodiment of the present invention;
Figure 4 is a plan view of a blank of the lid of figure 3;

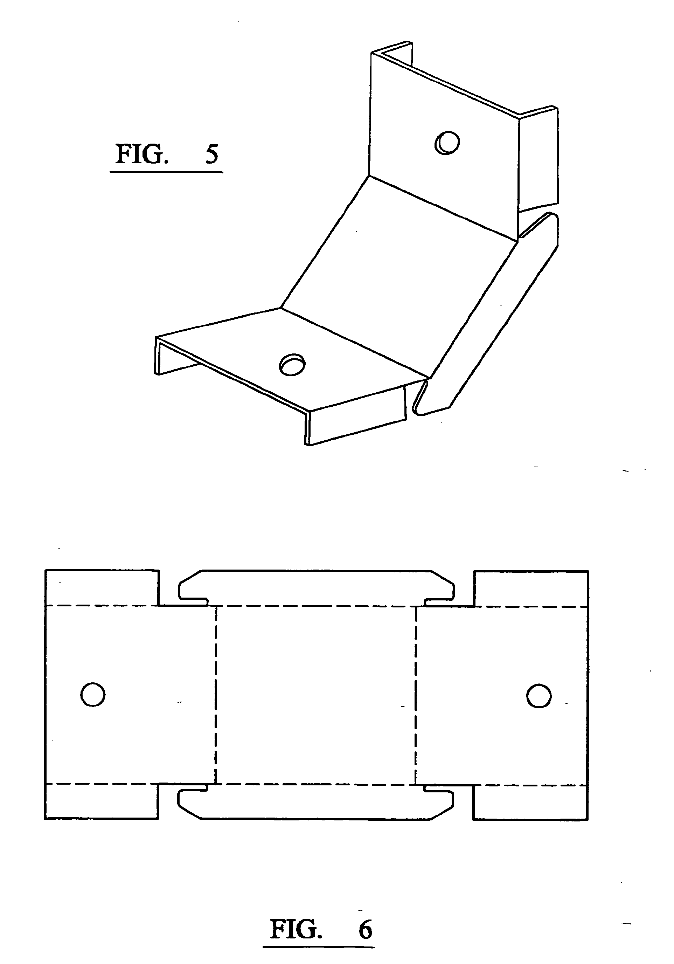

Figure 5 is a perspective view of a lid of a second embodiment of the present invention;
Figure 6 is a plan view of a blank of the lid of Figure 5; and

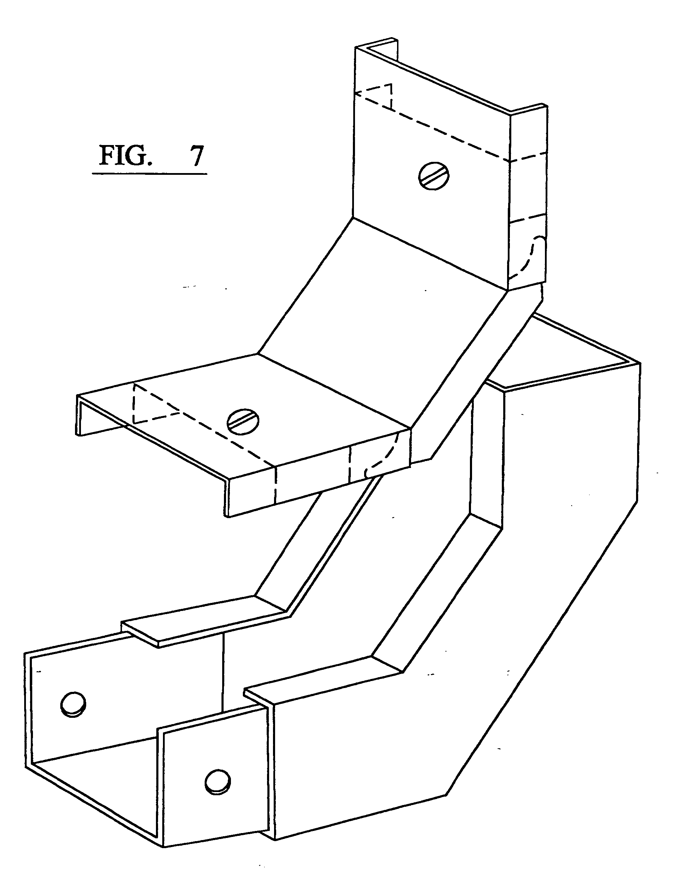

Figure 7 is a perspective view of a conduit corner arrangement including the lid of Figure 5 and cover plates.

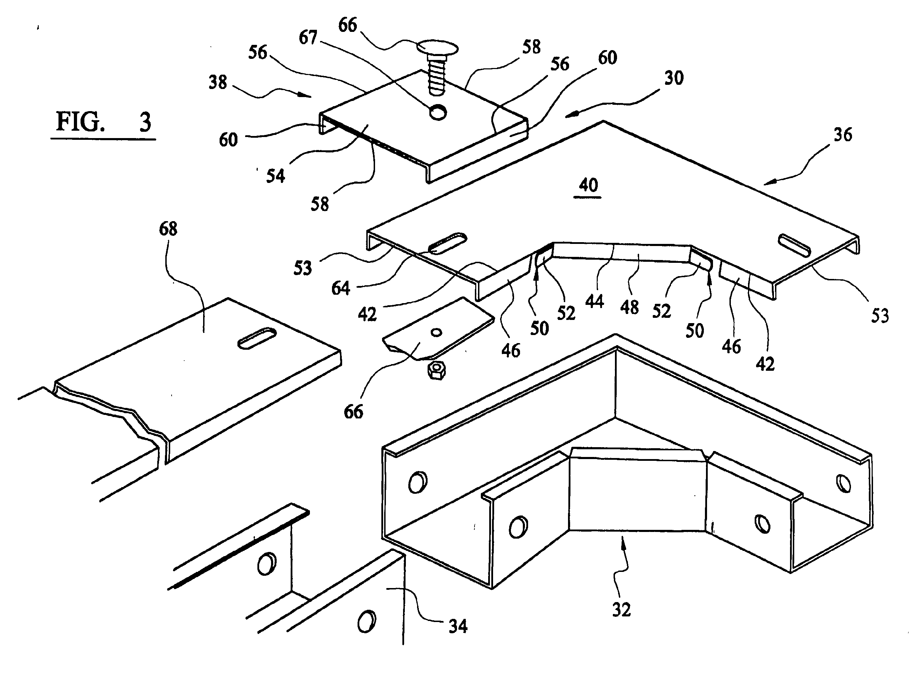

Figure 3 shows a cover 30 for a junction piece 32 for joining a first length of conduit 34 to a second length of conduit (not shown) extending generally at a right angle to the first length of conduit. The cover 30 has a lid 36 and cover plate 38.

The lid 36 is formed by the cutting and bending of a single sheet of stainless steel and thereby forms a first surface 40 having first edges 42 and a second edge 44. First edges 42 have extending from them, partially along their length, first edge portions 46, and second edge 44 has extending from it second edge portion 48. First and second edge portions 46 and 48 are substantially perpendicular to first surface 40.

First edge portions 46 do not extend entirely along the length of first edges 42 thereby creating gaps 50. Second edge portion 48 has extensions 52 extending beyond second edge 44 such that extensions 52 to second edge portion 48 extend into gaps 50. Third edges 53 are adapted to abut lids of adjacent lengths of conduit.

Cover plate 38 is also formed from the cutting and bending of a single sheet of stainless steel, and has a second surface 54, and fourth edges 56 separated by fifth edges 58. Fourth edges 56 have extending from them third edge portions 60 which are substantially perpendicular to second surface 54.

In use, the cover plate 38 is attached to lid 36 through hole 62 and slot 64 by turnbuckle 66. When located on lid 36, cover plate 38 extends from the junction between second edge portion 48 and the extensions 52 to said edge portion, to beyond the opposite end of edge portion 46 where lid 68 of conduit portion 34 which in use is located adjacent lid 36.

Third edge portion 60 of cover plate 38 therefore extends along the whole of corresponding edge 42 covering edge portion 46 gap 50 and extension 52. Cover plate 38 creates a continuous smooth surface without acute angles which is therefore easy to keep clean and maintain a low hygiene risk.

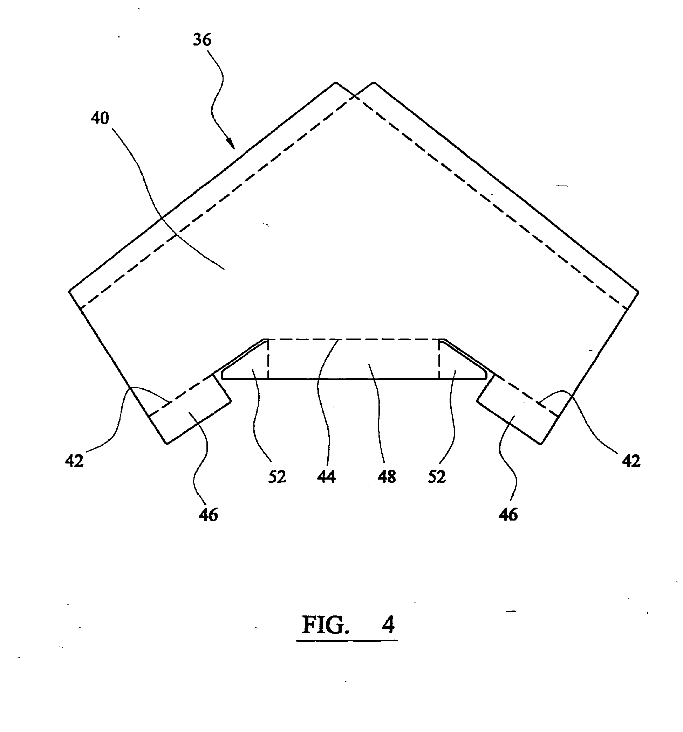

The blank in Figure 4 can be bent along the dotted lines to form lid 36. Other numerals shown thereon indicate the parts which will be formed from the cutting and bending of the blank.

It will be appreciated by persons skilled in the art that the above embodiments have been shown by way of example only and not in any limitative sense, and that various alterations and modifications are possible without departure from the scope of the invention as defined by the appended claims.

## Claims

1. A cover (30) for a junction piece (32) for joining at least one first length of conduit (34) to at least one second length of conduit extending at an angle thereto, the cover (30) comprising:
a lid (36) including:
a first surface (40) having at least one first edge (42) and at least one second edge (44) extending at an angle to each other;
a respective first edge portion (46) extending partially along the or each said first edge (42) and substantially perpendicularly to said first surface (40); and
a respective second edge portion (48) extending at least partially along the or each said second edge (44) and substantially perpendicular to said first surface (40); wherein the or each first edge portion (46) extends only partially along the corresponding first edge (42) to create a gap (50) adjacent the corresponding second edge portion (48), and said second edge portion (48) extends beyond said second edge (44) into said gap (50).

2. A cover (30) according to claim 1, wherein said first surface (40) is substantially planar.

3. A cover (30) according to claim 1, wherein said first surface (40) comprises a plurality of substantially planar surfaces not extending in a single plane.

4. A cover (30) according to any one of the preceding claims, further comprising at least one cover plate (38) for partially covering said first surface (40), wherein the or each said cover plate (38) extends in use from adjacent the junction between said first (42) and second edges (44) to beyond a third edge (53) of said first surface (40) which extends from said first edge (42) and provides in use a junction with a lid (36) of said first or second length of conduit (34).

5. A cover (30) according to claim 4, wherein the or each said cover plate (38) comprises a second substantially planar surface (54) having at least one pair of fourth edges (56) separated by at least one pair of fifth edges (58), said fourth edges (56) having third edge portions (60) extending substantially perpendicular to said second surface (54).

6. A cover (30) according to any one of the preceding claims, wherein said lid (36) and/or said cover plate (38) are constructed from stainless steel sheet.

7. A cover (30) according to any one of the preceding claims, wherein said lid (36) is provided with a gasket.

8. A cover (30) according to claim 7, wherein the gasket is of Neoprene.

## Patentansprüche

1. Abdeckung (30) für ein Übergangsstück (32) zum Verbinden von wenigstens einem ersten Kanalstück (34) mit wenigstens einem zweiten, im Winkel zu diesem verlaufendem Kanalstück, wobei die Abdeckung (30) Folgendes umfasst:
einen Deckel (36), der Folgendes aufweist:
eine erste Oberfläche (40) mit wenigstens einem ersten Rand (42) und wenigstens einem zweiten Rand (44), die im Winkel zueinander verlaufen;
einen jeweiligen ersten Randteil (46), der teilweise an dem oder jedem genannten ersten Rand (42) entlang und im Wesentlichen senkrecht zu der genannten ersten Oberfläche (40) verläuft; und
einen jeweiligen zweiten Randteil (48), der wenigstens teilweise an dem oder jedem genannten zweiten Rand (44) entlang und im Wesentlichen senkrecht zu der genannten ersten Oberfläche (40) verläuft; wobei der oder jeder erste Randteil (46) nur teilweise an dem entsprechenden ersten Rand (42) entlang verläuft, um neben dem entsprechenden zweiten Randteil (48) eine Lücke (50) zu bilden, und der genannte zweite Randteil (48) über den genannten zweiten Rand (44) hinaus in die genannte Lücke (50) hinein verläuft.

2. Abdeckung (30) nach Anspruch 1, bei der die genannte erste Oberfläche (40) im Wesentlichen flach ist.

3. Abdeckung (30) nach Anspruch 1, bei der die genannte erste Oberfläche (40) mehrere im Wesentlichen flache Oberflächen umfasst, die nicht in einer einzelnen Ebene verlaufen.

4. Abdeckung (30) nach einem der vorhergehenden Ansprüche, ferner umfassend wenigstens eine Abdeckplatte (38) zum teilweisen Bedecken der genannten ersten Oberfläche (40), wobei die oder jede genannte Abdeckplatte (38) im Gebrauch von neben der Verbindungsstelle zwischen den genannten ersten (42) und zweiten (44) Rändern bis über einen dritten Rand (53) der genannten ersten Oberfläche (40) hinaus verläuft, der sich von dem genannten ersten Rand (42) erstreckt und im Gebrauch eine Verbindung mit einem Deckel (36) des genannten ersten oder zweiten Kanalstücks (34) bereitstellt.

5. Abdeckung (30) nach Anspruch 4, bei der die oder jede genannte Abdeckplatte (38) eine zweite im Wesentlichen flache Oberfläche (54) umfasst, die wenigstens ein Paar vierter Ränder (56) hat, die durch wenigstens ein Paar fünfter Ränder (58) voneinander getrennt sind, wobei die genannten vierten Ränder (56) dritte Randteile (60) haben, die im Wesentlichen senkrecht zu der genannten zweiten Oberfläche (54) verlaufen.

6. Abdeckung (30) nach einem der vorhergehenden Ansprüche, bei der der genannte Deckel (36) und/oder die genannte Abdeckplatte (38) aus rostfreiem Stahlblech hergestellt ist/sind.

7. Abdeckung (30) nach einem der vorhergehenden Ansprüche, bei der der genannte Deckel (36) mit einer Dichtung versehen ist.

8. Abdeckung (30) nach Anspruch 7, bei der die Dichtung aus Neopren ist.

## Revendications

1. Couvre-joint (30) pour pièce de jonction (32) permettant de joindre au moins une première longueur de conduit (34) à au moins une deuxième longueur de conduit s'étendant selon un angle par rapport à celles-ci, le couvre-joint (30) comportant :
un couvercle (36) comprenant :
une première surface (40) ayant au moins un premier bord (42) et au moins un deuxième bord (44) s'étendant selon un angle l'un par rapport à l'autre ;
une première partie de bord respective (46) s'étendant partiellement le long dudit ou de chaque dit premier bord (42) et essentiellement de manière perpendiculaire par rapport à ladite première surface (40) ; et
une deuxième partie de bord respective (48) s'étendant au moins partiellement le long dudit ou de chaque dit deuxième bord (44) et essentiellement de manière perpendiculaire par rapport à ladite première surface (40) ; dans lequel la ou chaque première portion de bord (46) s'étend uniquement partiellement le long du premier bord correspondant (42) pour créer un espace (50) adjacent à la deuxième portion de bord correspondante (48), et ladite deuxième portion de bord (48) s'étend au-delà dudit deuxième bord (44) dans ledit espace (50).

2. Couvre-joint (30) selon la revendication 1, dans lequel ladite première surface (40) est essentiellement plane.

3. Couvre-joint (30) selon la revendication 1, dans lequel ladite première surface (40) comporte une pluralité de surfaces essentiellement planes qui ne s'étendent pas dans un seul plan.

4. Couvre-joint (30) selon l'une quelconque des revendications précédentes, comportant par ailleurs au moins une plaque couvre-joint (38) destinée à recouvrir partiellement ladite première surface (40), dans lequel ladite ou chaque dite plaque couvre-joint (38) s'étend en cours d'utilisation d'un endroit adjacent à la jonction entre ledit premier bord (42) et ledit deuxième bord (44) à au-delà d'un troisième bord (53) de ladite première surface (40) qui s'étend en provenance dudit premier bord (42) et met en oeuvre en cours d'utilisation une jonction avec un couvercle (36) de ladite première ou deuxième longueur de conduit (34).

5. Couvre-joint (30) selon la revendication 4, dans lequel ladite ou chaque dite plaque couvre-joint (38) comporte une deuxième surface essentiellement plane (54) ayant au moins une paire de quatrièmes bords (56) séparés par au moins une paire de cinquièmes bords (58), lesdits quatrièmes bords (56) ayant des troisièmes portions de bord (60) s'étendant essentiellement de manière perpendiculaire par rapport à ladite deuxième surface (54).

6. Couvre-joint (30) selon l'une quelconque des revendications précédentes, dans lequel ledit couvercle (36) et/ou ladite plaque couvre-joint (38) sont réalisés à partir d'une feuille d'acier inoxydable.

7. Couvre-joint (30) selon l'une quelconque des revendications précédentes, dans lequel ledit couvercle (36) est muni d'un joint statique.

8. Couvre-joint (30) selon la revendication 7, dans lequel le joint statique est en néoprène.
